# EUROPÄISCHE PATENTSCHRIFT

(11) **EP 0 357 949 B1**
(45) Veröffentlichungstag und Bekanntmachung des Hinweises auf die Patenterteilung: **05.05.1993**
(21) Anmeldenummer: 89114227.5
(22) Anmeldetag: 02.08.1989
(51) Int. Cl.: B65D 88/74, A23L 3/34

(54) **Vorrichtung zur Erzeugung einer künstlichen Atmosphäre in einem Transportbehälter**
Device to generate an artificial atmosphere in a transport container
Dispositif pour produire une atmosphère artificielle dans un conteneur transporteur

(30) Priorität: 31.08.1988 DE 3829435
(43) Veröffentlichungstag der Anmeldung: 14.03.1990
(73) Patentinhaber: Qualmann, Horst, 21423 Winsen (DE)
(72) Erfinder: Qualmann, Horst, 21423 Winsen (DE)
(74) Vertreter: Niedmers, Ole, Dipl.-Phys.

(56) Entgegenhaltungen:
- EP-A- 0 120 271
- DE-A- 3 341 848
- DE-B- 1 274 030
- FR-A- 1 490 951
- FR-A- 2 107 960
- GB-A- 1 132 151
- US-A- 3 781 139

## Beschreibung

Die Erfindung betrifft eine Vorrichtung zur Erzeugung einer künstlichen Atmosphäre in einem Behälter zum Transport von Waren, insbesondere in einem Container, bei dem Stickstoff (N₂) in den Behälter durch Transportmittel zur Schaffung einer Schutzgasatmosphäre im Behälter überführbar ist, die einen sauerstoffempfindlichen Sensor umfaßt.

Eine Vorrichtung dieser Art ist bekannt (GB-A-1 032 151). Bei dieser Vorrichtung wird zur Erzeugung einer Inertgasatmosphäre in einem Transportbehälter zum Transport von verderblichen Waren ein Inertgas, das beispielsweise Stickstoff, Argon, Helium oder ein anderes Edelgas ist, verwendet, wobei dieses Inertgas in flüssiger Form in einem gesonderten Behälter mitgeführt wird. Von dem Behälter wird das Inertgas nach entsprechender Entspannung in gasförmigem Zustand in den Behälter gegeben, um dort die gewünschte Inertgasatmosphäre zu erzeugen.

Es ist aber bisher in der Regel allgemein üblich, Südfrüchte, die beispielsweise in tropischen oder subtropischen Gebieten wachsen, in Kühlräumen von Schiffen oder eigens mit Kühlaggregaten ausgerüsteten Containern, die auf Schiffen transportiert werden, zu den Abnehmern zu transportieren. Es ist auch bekannt, daß Südfrüchte, die beispielsweise in noch nicht reifem Zustand gepflückt werden, während des Seetransports in Kühlräumen oder Kühlcontainern reifen zu lassen, wobei die Dauer der Reife so vorab bemessen wird, daß nach dem Ende des Seetransports am Bestimmungsort die Früchte eine für den Verzehr geeignete Reife aufweisen. Dabei ist ebenfalls bekannt, daß durch Kühlung der Reifeprozeß der Früchte während des Transports zwar zeitlich gedämpft bzw. verzögert werden kann, eine Reife jedoch auch bei geeigneter Kühlung der Früchte stattfindet. Das hat vielfach zur Folge, daß bei Transportverzögerungen, die vielfach nicht beeinflußbar sind, die Früchte derart reif geworden sind, daß sie am Bestimmungsort nur noch vernichtet oder aber als Viehfutter benutzt werden können, nicht jedoch für den menschlichen Verzehr geeignet sind.

Aus diesem Grunde werden hochempfindliche Südfrüchte, deren Reifeprozeß nach dem Pflücken einerseits verhältnismäßig kurze Zeit benötigt und die andererseits sehr wertvoll sind, heutzutage in der Regel per Luftfracht befördert, was mit ungeheuren Transportkosten verbunden ist. Das hat seinen Grund im wesentlichen darin, daß die dafür zur Verfügung stehenden Flugzeuge naturgemäß nicht die Transportkapazität haben können wie beispielsweise heutzutage für den Kühltransport normalerweise verwendete Containerfrachter oder Kühlfrachter schlechthin.

Es ist Aufgabe der vorliegenden Erfindung, eine Vorrichtung zu schaffen, mittels der transportempfindliche Waren wie Früchte und sonstige Lebensmittel, die während des Transports einem normalen Reifeprozeß unterliegen, in Behältern wie Containern derart transportieren werden können, daß während des Transports der Reifeprozeß nahezu beliebig lange unterbunden werden kann, ohne daß die Waren verderben, wobei die Vorrichtung leicht und kostengünstig herstellbar sein soll, damit sie auch zum massenweisen Einsatz geeignet ist.

Gelöst wird die Aufgabe gemäß der Erfindung durch eine an den Behälter lösbar anbringbare Einheit, die ein Aggregat zur Gewinnung von Stickstoff (N₂) aus der Umgebungsluft umfaßt, daß die Schutzgasatmosphäre im Container nach Art eines Kreislaufs mittels vorrichtungseigener Sensoren ständig in bezug auf wenigstens die Stickstoff- und die Sauerstoffkonzentration überwach- und steuerbar ist und daß im wesentlichen alle zur Erzeugung, Überwachung und Regelung der Schutzgasatmosphäre nötigen Elemente in einem die Einheit bildenden Gehäuse angeordnet sind.

Der Vorteil der Vorrichtung liegt im wesentlichen darin, daß bei einer Schutzgasatmosphäre aus Stickstoff von bis zu 99 % der Reifeprozeß der Ware nahezu beliebig lange unterbunden werden kann, ohne daß die Waren, beispielsweise Südfrüchte oder auch Blumen, in irgendeiner Weise Schaden nehmen oder ihr Geschmack beim Verzehr oder ihr Ansehen in irgendeiner Weise beeinträchtigt ist. Ein weiterer wesentlicher Vorteil der Vorrichtung liegt darin, daß prinzipiell kein Vorrat an Stickstoff, wie es im Stand der Technik bisher schon versucht wurde, der beispielsweise in Druckflaschen mittransportiert wurde, transportiert werden muß, da erfindungsgemäß der benötigte Stickstoff durch die Vorrichtung aus der Umgebungsluft selbst gewonnen wird. Auch ist es von Vorteil, daß die Schutzgasatmosphäre in Container nach Art eines Kreislaufs mittels vorrichtungseigener Sensoren ständig in bezug auf wenigstens die Stickstoff- und Sauerstoffkonzentration überwach- und steuerbar ist. Diese Maßnahme unterstützt die Ausbildung der Vorrichtung in Form einer an den Behälter lösbar anbringbaren Einheit sehr wesentlich, da keinerlei Installationen im Behälter erforderlich sind.

Gemäß einer vorteilhaften Ausgestaltung der Erfindung enthält das Aggregat zur Gewinnung des Stickstoffs wenigstens einen Gasgenerator und einen Kompressor für die Verdichtung des gewonnenen Stickstoffs sowie einen Behälter für die Speicherung des Stickstoffs. Dadurch wird vorteilhafterweise erreicht, daß neben der Vorrichtung keinerlei zusätzliche Einrichtungen vorgesehen werden müssen, um die erfindungsgemäß vorgesehene Schutzgasatmosphäre im Behälter zu schaffen. Dazu sei erwähnt, daß bisher beispielsweise mit Kühleinrichtungen versehene Container vielfach an einen Kühlmittelkreislauf eines Transportfahrzeugs bzw. Schiffs angeschlossen waren, mit der nachteiligen Folge, daß beispielsweise am Bestimmungsort dieser Kühlprozeß wegen der erforderlichen Abkopplung von der transportmitteleigenen Kühlversorgung zwangsweise abgebrochen werden mußte.

Für bestimmte Einsatzfälle beim Transport bestimmter Waren kann es sinnvoll sein, das mit einer Schutzgasatmosphäre ausgefüllte Behälterinnere eines Containers zusätzlich noch zu kühlen. Dazu ist vorzugsweise in der Vorrichtung ein Kühlaggregat zur Kühlung der Schutzgasatmosphäre vorgesehen.

Es sind verschiedene Möglichkeiten praktizierbar, das in der Vorrichtung erzeugte Schutzgas in das Innere des Transportbehälters zu überführen, beispielsweise mittels einer Pumpe oder dgl.. Gemäß einer vorteilhaften Ausgestaltung der Erfindung wird das Transportmittel jedoch durch eine Ventilatoreinrichtung gebildet, wie sie beispielsweise auch bei Vorrichtungen verwendet wird, die lediglich der Kühlung des Innenraums des Transportbehälters dienen.

Die Schutzgasatmosphäre selbst ist vorzugsweise nach Art eines Kreislaufs ständig in bezug auf die Stickstoff-, die Sauerstoff- und die Kohlendioxydkonzentration überwach- und steuerbar, wobei vorteilhafterweise diese Überwach- und Steuerfunktion von einer vorrichtungseigenen Überwach- und Steuereinheit ausgeübt wird. Es ist bekannt, daß gerade beim rauhen Transportbetrieb, wie er bei dem Transport von Waren im Seeverkehr angetroffen wird, Überwach- und Steuereinrichtungen, d. h. im wesentlichen der gesamte Sensor- und Regelbereich, ganz besonders starken Belastungen ausgesetzt ist und vielfach Störungen auftreten können, die eine damit ausgerüstete Gesamtanlage funktionsmäßig völlig zum Erliegen bringen. In der Regel ist auch während des Schiffstransports technisch spezialisiertes Personal nicht vorhanden, das bei einem Ausfall oder einer Beschädigung dieser vorgenannten Einrichtungen eingreifen kann, um die Einrichtungen wieder funktionsfähig zu machen. Vorteilhafterweise ist deshalb die Überwachungs- und Steuereinheit der Vorrichtung als jederzeit entfernbares Modul ausgebildet, das bei geeigneter Fehlermeldung auch durch fachlich ungeschultes Personal entfernt und durch einen neuen Modul ausgetauscht werden kann, der beispielsweise beim Transport sicherheitshalber immer mitgeführt wird.

Wie oben schon im Zusammenhang mit dem Kühlmittel erwähnt, kann auch gemäß einer weiteren vorteilhaften Ausbildung der Erfindung die für den Betrieb der Vorrichtung notwendige Energie einer dem Transport der Behälter dienenden Fremdeinheit, beispielsweise dem entsprechenden Energiekreislauf des Transportschiffes, entnommen werden. Es ist jedoch vorteilhafter, die für den Betrieb der Vorrichtung notwendige Energie durch ein vorrichtungseigenes Aggregat bereitzustellen, das ebenso wie die zuvor erwähnte Überwach- und Steuereinheit als jederzeit mit wenigen Handgriffen durch ungeschultes Personal entfern- und an die Vorrichtung anbaubares Modul ausgebildet ist.

Die Vorrichtung ist insgesamt vorzugsweise so ausgestaltet, daß die zu ihrem Betrieb notwendige Energie primär aus elektrischer Energie gewonnen wird. Es sei aber darauf verwiesen, daß prinzipiell jede geeignete andere Energiequelle alternativ oder Zusätzlich heranziehbar ist, beispielsweise im Bordnetz eines Schiffes vorhandener Heißdampf, Kühlmittel oder auch beliebige dort vorhandene Hydraulikmittel.

Vorteilhafterweise sind neben der in Form eines Moduls ausgebildeten Überwach- und Steuereinheit wenigstens das Kühlaggregat, das Stickstoffgewinnungsaggregat und das Energieversorgungsaggregat als Moduln ausgebildet. Diese modulare Bauweise der einzelnen Komponenten bzw. Elemente der Vorrichtung, die zu ihrer bestimmungsgemäßen Funktion im Gehäuse angeordnet sind, gestatten den schnellen Ausund Einbau auch während des Transports durch fachlich ungeschultes Personal, so daß auch ein dauerhafter sicherer Betrieb während längerer Transportwege mit der erfindungsgemäßen Vorrichtung möglich ist.

Das Gehäuse mit den einzelnen Komponenten bzw. Elementen ist von außen an den Transportbehälter (Container) in der Regel an dessen schmaler Stirnwand über dort vorhandene Verbindungsmittel anbringbar, wie sie bisher schon zum Anbringen von Vorrichtungen verwendet werden, die lediglich der Erzeugung einer gekühlten Atmosphäre im Transportbehälter dienten.

Aus der EP-A-0 120 271 ist ein Aggregat bekannt, mit dem Stickstoff aus der Umgebungsluft gewonnen wird. Dieses Aggregat ist fest mit dem Behälter verbunden, d.h. jeder Behälter (Container) besitzt ein eigenes Aggregat zur Erzeugung von Stickstoff aus der Umgebungsluft, das in einer nach innen gerichteten Vertiefung der Behälterwand angeordnet ist.

Aus der FR-A-1 490 951 ist eine Ventilatoreinrichtung zum Transport von kühler Luft bekannt, die in einem transportsystemeigenen Kühlsystem, beispielsweise dem eines Eisenbahnwagens, eines Schiffes oder dergl. erzeugt wird.

Die Erfindung wird nun unter Bezugnahme auf die nachfolgenden schematischen Zeichnungen anhand eines Ausführungsbeispieles im einzelnen beschrieben. Darin zeigen:

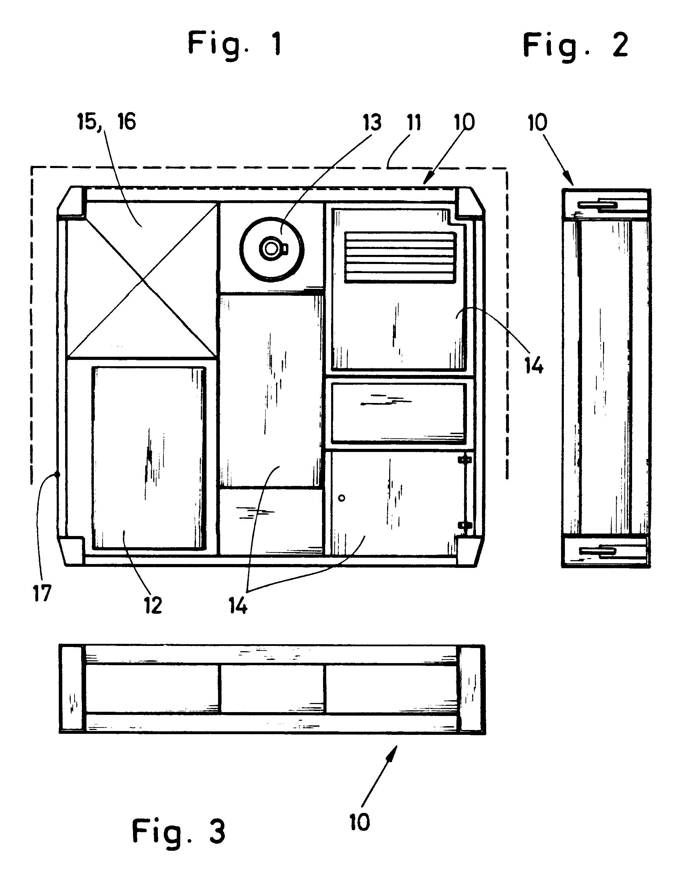

- Fig. 1: in der Ansicht von vorn das Gehäuse der Vorrichtung in offener Darstellung zur Verdeutlichung der Anordnung der Komponenten,
- Fig. 2: die in Fig. 1 dargestellte Vorrichtung in der Seitenansicht und
- Fig. 3: die in Fig. 1 dargestellte Vorrichtung in der Ansicht von oben.

Die Vorrichtung 10 besteht im wesentlichen aus einem Gehäuse 17, das beispielsweise einen metallischen Rahmen bekannter Bauweise aufweist, was hier im einzelnen nicht gesondert dargestellt ist. Im Gehäuse 17 ist an geeigneter Stelle ein Aggregat 12 zur Gewinnung von Stickstoff (N₂) aus der Umgebungsluft vorhanden. Der Stickstoff (N₂) wird in einen Behälter 11 über an geeigneter Stelle in der Vorrichtung 10 bzw. durch deren Gehäuse 17 mit einem Ablasstutzen hindurchtretend überführt. Dafür dient ein Transportmittel 13 für den in der Vorrichtung 10 mittels eines Aggregats 12 zum gewonnenen Stickstoff, beispielsweise in Form eines Ventilators bekannter Bauart.

Das Aggregat 12 selbst umfaßt wenigstens einen Gasgenerator und einen Kompressor für die Verdichtung des gewonnenen Stickstoffs sowie einen Behälter für die Speicherung des gewonnenen Stickstoffs, wobei die vorbezeichneten Komponenten hier im einzelnen nicht gesondert dargestellt sind, da sie aus beliebigen geeigneten im Handel befindlichen Komponenten aufgebaut und zusammengestellt werden können.

Zusätzlich weist die Vorrichtung 10 ein Kühlaggregat 14 auf, mit dem die in den Behälter 11 (Container) überführbare Schutzgasatmosphäre auch noch gekühlt werden kann.

Schließlich ist in der Vorrichtung 10 ein Energieversorgungsaggregat 15 angeordnet, das elektrische Energie für die Vorrichtung 10 bzw. deren einzelne Komponenten liefert. Die Schutzgasatmosphäre selbst ist nach Art eines Kreislaufs ständig in Bezug auf die Stickstoff-, die Sauerstoff- und die Kohlendioxidkonzentration überwach- und steuerbar. Dieses geschieht bei der Vorrichtung 10 durch eine Oberwach- und Steuereinheit 16, die ebenfalls im Gehäuse 17 angebracht ist. Durch die Form eines Kreislaufs für die sich ständig im Behälter 11 umwälzende Schutzgasat mosphäre ist es prinzipiell nicht nötig, Sensoren vorzusehen, die beispielsweise die Stickstoffkonzentration, die Sauerstoffkonzentration, die Kohlendioxidkonzentration oder die Temperatur der Schutzgasatmosphäre im Behälter 11 überwachen, vielmehr können alle vorgenannten Größen durch geeignete Sensoren, die in der Vorrichtung 10 selbst angeordnet sind, überwacht werden. Gleiches gilt für den Druck des Gasgenerators und dergleichen.

Alle in der Vorrichtung 10 enthaltenen Komponenten sind in Form einzelner Moduln aufgebaut und durch schnell lösbare elektrische oder Rohranschlüsse geeignet miteinander verbunden, so daß fachlich ungeschultes Personal bei einem erkannten fehlerhaften Betriebsverhalten der einzelnen Moduln, das ggf. durch die Überwach- und Steuereinheit 16 selbst in Bezug auf den ordnungsgemäßen Betriebsablauf angezeigt werden kann, das Auswechslen selbst durchführen kann.

Mit dem Aggregat 12 zur Gewinnung von Stickstoff (N₂) zur Erzeugung der Schutzgasatmosphäre im Behälter 11 ist ein Volumendurchsatz von ca. 15 m³/h bei einem Reinheitsgrad von annähernd 97 - 99% erreichbar.

Das Kühlaggregat 14 stellt sicher, daß die Schutzgasatmosphäre im Innenraum des Behälters 11 zudem mit hoher Genauigkeit bis wenigstens -5° C. abgekühlt und bei einer vorgewählten Temperatur konstant haltbar ist.

Bei der Beladung eines Behälters 11 mit reifeempfindlichen Waren wie Südfrüchten, Blumen oder dergleichen wird, nachdem der Beladungsvorgang abgeschlossen ist, die Vorrichtung 10 über geeignete Befestigungsmittel an der Außenwand eines Transportbehälters befestigt, d.h. bei Verwendung genormter Container in der Regel an der schmalen Außenwand, und in Betrieb gesetzt. Dann erfolgt zunächst eine Schnellspülung des Behälterinneren durch den kompressorbeaufschlagten Gasgenerator, der Teil des Aggregats 12 ist. Während des sich anschließenden Transports oder auch eines beliebigen Lagerzeitraums ohne Transport erfolgt neben der konstant aufrechterhaltenen Schutzgasatmosphäre im Behälterinneren auch ein automatischer Ausgleich der Leckverluste. Während des Betriebes wird in der Vorrichtung 10 neben der Stickstoffkonzentration in der Schutzgasatmosphäre auch die Sauerstoffkonzentration und die Kohlendioxidkonzentration neben der Temperatur der Schutzgasatmosphäre überwacht und auf vorbestimmter Größe gehalten.

## Patentansprüche

1. Vorrichtung zur Erzeugung einer künstlichen Atmosphäre in einem Behälter (11) zum Transport von Waren, insbesondere in einem Container, bei dem Stickstoff (N₂) in den Behälter (11) durch Transportmittel (13) zur Schaffung einer Schutzgasatmosphäre im Behälter (11) überführbar ist, die einen sauerstoffempfindlichen Sensor umfaßt, gekennzeichnet durch eine an den Behälter (11) lösbar anbringbare Einheit, die ein Aggregat (12) zur Gewinnung des Stickstoffs (N₂) aus der Umgebungsluft umfaßt, daß die Schutzgasatmosphäre im Container nach Art eines Kreislaufs mittels vorrichtungseigener Sensoren ständig im bezug auf wenigstens die Stickstoff- und die Sauerstoffkonzentration überwacht und steuerbar ist und daß im wesentlichen alle zur Erzeugung, Überwachung und Regelung der Schutzgasatmosphäre nötigen Elemente in einem die Einheit bildenden Gehäuse (17) angeordnet sind.

2. Vorrichtung nach Anspruch 1, dadurch gekennzeichnet, daß das Aggregat (12) wenigstens einen Gasgenerator und einen Kompressor für die Verdichtung des gewonnenen Stickstoffs (N₂) sowie einen Behälter für die Speicherung des Stickstoffs enthält.

3. Vorrichtung nach einem oder beiden der Ansprüche 1 oder 2, dadurch gekennzeichnet, daß ein Kühlaggregat (14) zur Kühlung der Schutzgasatmosphäre vorgesehen ist.

4. Vorrichtung nach einem oder mehreren der Ansprüche 1 bis 3, dadurch gekennzeichnet, daß das Transportmittel (13) durch eine Ventilatoreinrichtung gebildet wird.

5. Vorrichtung nach einem oder mehreren der Ansprüche 1 bis 4, dadurch gekennzeichnet, daß die Schutzgasatmosphäre nach Art eines Kreislaufs ständig in bezug auf die Stickstoff-, die Sauerstoff- und die Kohlendioxydkonzentration überwach- und steuerbar ist.

6. Vorrichtung nach Anspruch 5, dadurch gekennzeichnet, daß die Überwach- und Steuerfunktion von einer vorrichtungseigenen Überwach- und Steuereinheit (16) ausgeübt wird.

7. Vorrichtung nach Anspruch 6, dadurch gekennzeichnet, daß die Überwach- und Steuereinheit (16) als Modul ausgebildet ist.

8. Vorrichtung nach einem oder mehreren der Ansprüche 1 bis 7, dadurch gekennzeichnet, daß die für ihren Betrieb notwendige Energie durch ein vorrichtungseigenes Aggregat (15) bereitstellbar ist.

9. Vorrichtung nach einem oder mehreren der Ansprüche 1 bis 8, dadurch gekennzeichnet, daß die für ihren Betrieb notwendige Energie einer dem Transport der Behälter (11) dienenden Fremdeinheit entnommen wird.

10. Vorrichtung nach einem oder beiden der Ansprüche 8 oder 9, dadurch gekennzeichnet, daß die Energie elektrische Energie ist.

11. Vorrichtung nach einem oder mehreren der Ansprüche 3 bis 10, dadurch gekennzeichnet, daß wenigstens das Kühlaggregat (14), das Stickstoffgewinnungsaggregat (12) und das Energieversorgungsaggregat (15) als Moduln ausgebildet sind.

## Claims

1. Device for the production of an artificial atmosphere in a container (11) for the transport of goods, particularly a transport container, by means of which nitrogen (N₂) can be transferred by carrying means (13) into the container (11) to create a protective gas atmosphere in the container (11), which device includes an oxygen-sensitive sensor, characterized by a unit which can be removably mounted on the container (11) and which comprises a set (12) for the extraction of nitrogen (N₂) from the ambient air, in that the protective gas atmosphere in the container is permanently supervised and controllable in terms of at least the nitrogen concentration and the oxygen concentration in the manner of a circular movement by means of sensors forming part of the device, and in that substantially all the elements necessary for the production, supervision and regulation of the protective gas atmosphere are mounted in a housing (17), forming the unit.

2. Device according to claim 1, characterized in that the set (12) contains at least one gas generator and a compressor for the compression of the nitrogen (N₂) extracted, as well as a container for the storage of the nitrogen.

3. Device according to either or both of claims 1 and 2, characterized in that a cooling unit (14) is provided for cooling the protective gas atmosphere.

4. Device according to one or more of claims 1 to 3, characterized in that the means of transport (13) are formed by a fan arrangement.

5. Device according to one or more of claims 1 to 4, characterized in that the protective gas atmosphere is permanently supervisable and controllable in terms of the concentration in nitrogen, oxygen and carbon dioxide in the manner of a circular movement.

6. Device according to claim 5, characterized in that the supervision and control function is performed by a supervision and control unit (16) which is an actual part of the device.

7. Device according to claim 6, characterized in that the supervision and control unit (16) is constructed as a module.

8. Device according to one or more of claims 1 to 7, characterized in that the power required for its operation can be made available by a unit (15) which is an actual part of the device.

9. Device according to one or more of claims 1 to 8, characterized in that the power required for its operation is taken from an external unit used for the transport of the container (11).

10. Device according to either or both of claims 8 and 9, characterized in that the power is electric power.

11. Device according to one or more of claims 3 to 10, characterized in that at least the cooling unit (14), the nitrogen extraction unit (12) and the power supply unit (15) are designed as modules.

## Revendications

1. Dispositif pour produire une atmosphère artificielle dans un récipent (11) destiné au transport de marchandises, notamment dans un container, dans lequel de l'azote (N₂) est transférable dans le récipient (11) par l'intermédiaire de moyens de transport (13) pour produire une atmosphère contrôlée à l'intérieur dudit récipient (11), dispositif comprenant un détecteur sensible à l'oxygène, caractérisé en ce qu'une unité peut être fixée de façon amovible au récipent (11), ladite unité comprenant un groupe (12) pour la production d'azote (N₂) à partir de l'air ambiant, en ce que l'atmosphère contrôlée à l'intérieur du container peut être surveillée et modulée en permanence, au moins en ce qui concerne les concentrations d'azote et d'oxygène, à la manière d'un mouvement circulaire et au moyen de détecteurs inhérents au dispositif, et en ce qu'essentiellement tous les éléments nécessaires à la production, la surveillance et la régulation de l'atmosphère contrôlée sont disposés à l'intérieur d'un boîtier (17) formant l'unité.

2. Dispositif selon la revendication 1, caractérisé en ce que le groupe (12) comprend au moins un générateur de gaz et un compresseur pour la compression de l'azote (N₂) obtenu, ainsi qu'un récipient pour le stockage de l'azote .

3. Dispositif selon les revendications 1 ou 2, caractérisé en ce qu'un groupe frigorifique (14) est prévu pour le refroidissement de l'atmosphère contrôlée.

4. Dispositif selon l'une quelconque ou plusieurs des revendications précédentes, caractérisé en ce que le moyen de transport est formé d'un dispositif de ventilation.

5. Dispositif selon l'une quelconque ou plusieurs des revendications précédentes, caractérisé en ce que l'atmosphère contrôlée peut être surveillée et modulée en permanence, à la manière d'un mouvement circulaire, en ce qui concerne les concentrations d'azote, d'oxygène et de dioxyde de carbone.

6. Dispositif selon la revendication 5, caractérisé en ce que les fonctions de surveillance et de régulation sont exercées par une unité de surveillance et de régulation (16) inhérente au dispositif.

7. Dispositif selon la revendication 6, caractérisé en ce que l'unité de surveillance et de régulation (16) se présente sous la forme d'un module.

8. Dispositif selon l'une quelconque ou plusieurs des revendications précédentes, caractérisé en ce que l'énergie nécessaire à son fonctionnement est mise à disposition par un groupe (15) inhérent au dispositif.

9. Dispositif selon l'une quelconque ou plusieurs des revendications précédentes, caractérisé en ce que l'énergie nécessaire à son fonctionnement est tirée d'une unité externe servant au transport des récipients (11).

10. Dispositif selon les revendications 8 ou 9, caractérisé en ce que l'énergie est de l'énergie électrique.

11. Dispositif selon l'une quelconque ou plusieurs des revendications 3 à 10, caractérisé en ce qu'au moins le groupe frigorifique (14), le groupe de production d'azote (12) et le groupe d'alimentation d'énergie (15) se présentent sous la forme de modules.
